# EUROPÄISCHE PATENTSCHRIFT

(11) **EP 3 325 211 B1**
(45) Veröffentlichungstag und Bekanntmachung des Hinweises auf die Patenterteilung: **20.10.2021**
(21) Anmeldenummer: 16770433.7
(22) Anmeldetag: 22.07.2016
(51) Int. Cl.: B23Q 7/14, G05B 19/12, G06K 7/08, G06K 19/06

(54) **WERKSTÜCKTRÄGER MIT EINEM CODEELEMENT FÜR EINE FERTIGUNGSANLAGE**
WORKPIECE CARRIER WITH A CODE ELEMENT FOR A PRODUCTION UNIT
PORTE-PIÈCE COMPRENANT UN ÉLÉMENT DE CODAGE POUR UNE INSTALLATION DE FABRICATION

(30) Priorität: 24.07.2015 AT 506572015
(43) Veröffentlichungstag der Anmeldung: 30.05.2018
(73) Patentinhaber: STIWA Holding GmbH, 4800 Attnang-Puchheim (AT)
(72) Erfinder: MERSNIK, Christian, 4800 Attnang-Puchheim (AT); PAUDITZ, Michael, 4690 Schwanenstadt (AT)
(74) Vertreter: Burger, Hannes
(86) Internationale Anmeldenummer: PCT/AT2016/060014
(87) Internationale Veröffentlichungsnummer: WO 2017/015686

(56) Entgegenhaltungen:
- EP-A1- 0 460 733
- AT-B- 288 112
- AT-B- 390 424
- DE-A1- 2 943 622
- DE-A1- 4 207 798
- DE-A1-102008 046 740
- JP-A- H0 613 453
- US-A1- 2013 064 937
- US-B1- 6 616 041
- US-B1- 6 782 750

## Beschreibung

Die Erfindung betrifft einen Werkstückträger für eine Fertigungsanlage mit zumindest einem Förderabschnitt, sowie die Fertigungsanlage und ein Verfahren zum Identifizieren eines Werkstückträgers.

Aus der EP2560861 A1 ist eine Fördervorrichtung mit einem Bauteilträgerwagen bekannt auf welchem ein RFID Chip angeordnet ist. Auf dem RFID Chip sind Informationen über den Bauteilträgerwagen gespeichert.

Die aus der EP2560861 A1 bekannte Fördervorrichtung mit dem Bauteilträgerwagen weist den Nachteil auf, dass zum Auslesen der Informationen über den Bauteilträgerwagen, dieser gestoppt oder zumindest verlangsamt werden muss, um den RFID Chip auslesen zu können.

Aus der AT413505 B ist ein allgemeiner Aufbau einer gattungsgemäßen Fördervorrichtung bekannt.

Die AT 390 424 B offenbart einen Werkstückträger nach dem Oberbegriff des Anspruchs 1 und ein Verfahren zum Identifizieren eines Werkstückträgers nach dem Oberbegriff des Anspruchs 8. An dem Werkstückträger ist eine Signalträgerplatte angeordnet, welche zur Aufnahme von einzelnen Signalträgern dient. Mehrere in der Signalträgerplatte aufgenommene Signalträger bilden einen Code zur Erkennung des Werkstückträgers. Weiters ist vorgesehen, dass die Signalträger auswechselbar an Aufnahmen in der Signalträgerplatte angeordnet sind. Der Code zur Erkennung des Werkstückträgers wird insbesondere dadurch gebildet, dass nicht an allen Aufnahmen der Signalträgerplatte ein Signalträger aufgenommen ist, sondern dass durch fehlende Signalträger Lücken und dadurch ein bestimmtes Codemuster gebildet sind.

Der vorliegenden Erfindung liegt die Aufgabe zugrunde eine verbesserte Fördervorrichtung zu schaffen, wobei das Identifizieren von Bauteilträgerwagen verbessert werden soll.

Diese Aufgabe der Erfindung wird durch den Werkstückträger nach Anspruch 1, die Fertigungsanlage nach Anspruch 6 und das Verfahren zum Identifizieren eines Werkstückträgers nach Anspruch 8 gelöst.

Erfindungsgemäß ist ein Werkstückträger für eine Fertigungsanlage mit zumindest einem Förderabschnitt ausgebildet. Der Werkstückträger umfasst einen Werkstückträgerkörper, eine am Werkstückträgerkörper angeordnete Werkstückaufnahme, eine am Werkstückträgerkörper angeordnete Führungseinrichtung durch welche der Werkstückträger verschiebbar in der Fertigungsanlage, insbesondere im Förderabschnitt, aufnehmbar ist, und ein am Werkstückträgerkörper angeordnetes Codeelement welches zur Identifizierung des Werkstückträgers mittels einem in der Fertigungsanlage angeordneten Erfassungsmittel ausgebildet ist. Das Codeelement weist zur Identifizierung in einer Längsausrichtung inhomogene Materialeigenschaften auf, wobei bei einer Relativbewegung des Codeelements in Längsausrichtung relativ zum Erfassungsmittel die inhomogenen Materialeigenschaften des Codeelements durch das Erfassungsmittel erfassbar sind und dadurch der Werkstückträger identifizierbar ist.

Von Vorteil an der erfindungsgemäßen Ausbildung ist, dass durch die inhomogenen Materialeigenschaften das Codeelement während des Vorbeifahrens des Werkstückträgers an einem Sensor ausgelesen werden kann. Dadurch kann der Werkstückträger identifiziert werden, ohne dass dieser dabei angehalten werden muss. Dies bringt eine erhebliche Verkürzung der Transportzeiten mit sich, wodurch die Effizienz der Fertigungsanlage verbessert werden kann.

Erfindungsgemäß ist das Codeelement als auf den Werkstückträgerkörper befestigtes Codeplättchen ausgebildet. Dabei ist von Vorteil, dass das Codeplättchen in einem eigenen Fertigungsprozess oder Fertigungsverfahren gefertigt werden kann. Dadurch kann das Codeplättchen mit einer möglichst hohen und ausreichenden Genauigkeit gefertigt werden, um eine entsprechende Auflösung zur Identifizierung des Codeplättchen erreichen zu können, wobei der Werkstückträger, insbesondere der Werkstückträgerkörper, mit einer geringeren Genauigkeitstoleranz gefertigt werden kann und somit die Herstellkosten für den Werkstückträgerkörper gemindert werden können. Darüber hinaus kann bei Bruch oder Verschleiß der Werkstückträgerkörper ausgetauscht werden wobei zur Identifizierung des Werkstückträgerkörpers das bereits vorhandene Codeplättchen verwendet werden kann. Das Codeplättchen kann durch Laserschneiden gefertigt werden.

Ferner kann vorgesehen sein, dass das Codeelement aus einem metallischen Werkstoff, insbesondere aus einem austenitischem Stahl, gebildet ist. Insbesondere ist dabei von Vorteil, dass ein austenitischem Stahl, beispielsweise durch einen induktiven Näherungssensor erfasst werden kann, und dadurch das Codeelement bzw. der Werkstückträger identifiziert werden kann. Ein derartiger Stahl kann beispielsweise ein NiRo-Stahl mit der Werkstoffnummer 1.4301 sein.

Erfindungsgemäß weist das Codeelement Aussparungen auf, wodurch die inhomogenen Materialeigenschaften gebildet sind. Ein derartiges Codeelement, insbesondere Codeplättchen, kann durch die Aussparungen in einem bewegten System gut ausgelesen werden, wodurch der Werkstückträger identifiziert werden kann. Insbesondere mit verschiedensten Sensoren, wie etwa optischen Sensoren, oder einem induktiven Näherungssensor können die Aussparungen im Codeplättchen den Erfassungszustand null repräsentieren und das volle Material des Codeplättchens kann den Erfassungszustand eins repräsentieren. Vorteilhaft ist auch eine Ausprägung, gemäß welcher vorgesehen sein kann, dass die Aussparungen durch ein Füllmaterial, wie etwa Kunstharz, ausgefüllt sind. Dadurch kann vermieden werden, dass unerwünschte Materialien wie etwa Schmutz in die Aussparungen gerät. Dabei kann die Qualität der abgelesenen Informationen verbessert werden, da potentielle Fehlerquellen minimiert werden können. Darüber hinaus ist Kunstharz einfach in die Aussparungen einzubringen und ist im ausgehärteten Zustand mechanisch sehr widerstandsfähig.

Erfindungsgemäß sind am Werkstückträgerkörper zumindest vier Codeelemente angeordnet, durch welche die Orientierung des Werkstückträgerkörpers bestimmt werden kann. Dadurch kann neben der Identifizierung und somit eindeutigen Zuordnung des Werkstückträgers auch die aktuelle Orientierung des Werkstückträgers festgestellt werden. Diese Information wird insbesondere benötigt, wenn ein Werkstückträger verwendet wird, welcher in verschiedenen Orientierungslagen, in der Fertigungsanlage verschoben bzw. transportiert werden kann.

Ferner kann es zweckmäßig sein, dass acht Codeelemente in Form von Codeplättchen an dem Werkstückträgerkörper angeordnet sind, wobei alle Codeplättchen gleich ausgebildet sind. Dabei ist von Vorteil, dass alle an einem der Werkstückträger angeordneten Codeplättchen die gleiche Form aufweisen und somit gemeinsam gefertigt werden können. Die Codeplättchen können dazu herangezogen werden um den Werkstückträger eindeutig identifizieren zu können und zusätzlich auch seine Orientierung eruieren zu können.

Darüber hinaus kann vorgesehen sein, dass die Codeelemente an einer Unterseite des Werkstückträgerkörpers angeordnet sind. Insbesondere ist dabei von Vorteil, dass die Codeplättchen durch den Werkstückträger geschützt sind. Außerdem kann ein Sensor, welcher an der Fertigungsanlage angeordnet ist, die Codeplättchen durch die beschriebene Positionierung der Codeplättchen gut erfassen.

Gemäß einer besonderen Ausprägung ist es möglich, dass das Erfassungsmittel in Form eines induktiven Näherungssensors ausgebildet ist. Dabei ist von Vorteil, dass ein induktiver Näherungssensor nur eine geringe Fehleranfälligkeit aufweist und somit die Erfassungsgenauigkeit sehr hoch ist.

Beim Verfahren zum Identifizieren eines Werkstückträgers, in einer Fertigungsanlage, ist vorgesehen, dass das Verfahren folgende Verfahrensschritte umfasst:
- Bewegen des Werkstückträgers in einem Förderabschnitt der Fertigungsanlage, wobei der Werkstückträger ein Codeelement aufweist, welches zur Identifizierung des Werkstückträgers mittels einem in der Fertigungsanlage angeordneten Erfassungsmittel ausgebildet ist, und welches zur Identifizierung in einer Längsausrichtung inhomogene Materialeigenschaften aufweist;
- Vorbeiführen des Werkstückträgers am Erfassungsmittel, wobei bei einer Relativbewegung des Codeelements relativ zum Erfassungsmittel die inhomogenen Materialeigenschaften des Codeelements durch das Erfassungsmittel erfasst werden;
- Auswerten des vom Erfassungsmittel abgegebenen Signals und dadurch identifizieren des Werkstückträgers,
   wobei die Fertigungsanlage nach Anspruch 6 oder 7 ausgebildet ist.

Von Vorteil am erfindungsgemäßen Verfahren ist, dass durch die inhomogenen Materialeigenschaften das Codeelement während des Vorbeifahrens des Werkstückträgers an einem Sensor ausgelesen werden kann. Dadurch kann der Werkstückträger identifiziert werden, ohne dass dieser dabei angehalten werden muss. Dies bringt eine erhebliche Verkürzung der Transportzeiten mit sich, wodurch die Effizienz der Fertigungsanlage verbessert werden kann. Insbesondere kann es vorteilhaft sein, wenn das Erfassungsmittel in Form eines induktiven Näherungssensors ausgebildet ist und das Codeelement aus einem metallischen Werkstoff, insbesondere aus einem ferromagnetischen Werkstoff, gebildet ist und Aussparungen aufweist, wodurch die inhomogenen Materialeigenschaften gebildet sind, wobei beim Vorbeiführen des Werkstückträgers am Erfassungsmittel von diesem die Aussparungen erfasst werden. Durch dies Maßnahmen kann erreicht werden, dass der Werkstückträger während der Verfahrbewegung identifiziert werden kann, wobei die Sensoranordnung bzw. das Codeelement möglichst einfach aufgebaut sein können und die Fehleranfälligkeit bei der Identifizierung des Werkstückträgers daher gering gehalten werden kann.

Darüber hinaus kann vorgesehen sein, dass die Codeelemente aufgrund unterschiedlicher Lage und Größe der Aussparungen unterschieden werden können und dadurch ein Werkstückträger eindeutig identifiziert werden kann. Mit anderen Worten ausgedrückt können die Codeelemente aufgrund ihrer unterschiedlichen Geometrie identifiziert und somit eindeutig zugeordnet werden.

Gemäß einer Weiterbildung ist es möglich, dass bei den Codeelementen die Abstände von steigender Flanke zu steigender Flanke und/oder von fallender Flanke zu fallender Flanke erfasst werden. Durch diese Maßnahme kann erreicht werden, dass ein eventuell auftretender Messfehler in der Messung zwischen steigender Flanke und fallender Flanke vermieden wird. Dadurch kann die Messgenauigkeit und somit die Erfassungsgenauigkeit hoch gehalten werden.

Ferner kann es zweckmäßig sein, dass an einem Werkstückträger acht Codeelemente angeordnet sind, welche in Form von Codeplättchen ausgebildet sind, wobei beim Vorbeiführen des Werkstückträgers am Erfassungsmittel immer zwei Codeplättchen erfasst werden und über die Orientierung der Codeplättchen die Orientierung des Werkstückträgers ermittelt wird. Durch das Anordnen von acht verschiedenen Codeelementen, insbesondere von Codeplättchen am Werkstückträger, kann erreicht werden, dass der Werkstückträger nicht nur identifiziert werden kann, sondern dass beim Vorbeifahren des Werkstückträgers am Erfassungsmittel auch die Orientierung des Werkstückträgers ermittelt werden kann. Weiters kann durch den Einsatz von acht Codeplättchen erreicht werden, dass die Codeplättchen, welche an einem Werkstückträger angeordnet sind, die gleiche Form aufweisen können und durch die Anordnung von jeweils zwei Codeplättchen zueinander die Orientierung des Werkstückträgers erfasst werden kann.

Darüber hinaus kann vorgesehen sein, dass auf Basis der Identifizierung des Werkstückträgers, die relevanten Daten des Identifizierten Werkstückträgers, wie etwa Informationen zu den zu bearbeitenden Werkstücken, über ein Netzwerk von einem Server geladen werden. Dabei ist von Vorteil, dass die relevanten Daten zum identifizierten Werkstückträger zentral verwaltet werden. Darüber hinaus können dadurch verschiedenste Informationen zu den Werkstückträgern am Server erfasst bzw. verändert werden.

Weiters kann vorgesehen sein, dass eine Steuereinheit die Verfahrgeschwindigkeit des Werkstückträgers beim Vorbeiführen am Erfassungsmittel vorgibt bzw. ermittelt und aufgrund der Taktung des eingehenden Signals des Erfassungsmittels die geometrische Ausgestaltung des Codeelements ermittelt wird und somit der Werkstückträger identifiziert wird. Das Codeelement lässt sich eindeutig über dessen Form identifizieren. Durch die Taktung des Signals des Erfassungsmittels, sowie der Kenntnis der aktuellen Verfahrgeschwindigkeit des Werkstückträgers lässt sich die Form des Codeelements berechnen. Die ermittelte Form des Codeelements kann mit einer Vergleichsdatenbank verglichen werden, wodurch das Codeelement und somit der Werkstückträger eindeutig zugeordnet werden kann. Alternativ zur Vergleichsdatenbank kann auch vorgesehen sein, dass der Werkstückträger dadurch identifiziert wird, dass die durch vorgegebene Berechnungen über die Geometrie des Codeelements die ID des Werkstückträgers berechnet wird.

Gemäß einer besonderen Ausprägung ist es möglich, dass durch das Erfassungsmittel die aktuelle Position des Werkstückträgers erfasst wird. Dies wird insbesondere dadurch erreicht, dass am Werkstückträger die Lage des Codeelements eindeutig festgelegt ist und dass unabhängig von der Identifizierung des Codeelements, mittels dem Erfassungsmittel die aktuelle Position des Werkstückträgers erfasst werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht der Fertigungsanlage in einer schematischen Darstellung;
- Fig. 2: den Werkstückträger in einer perspektivischen Ansicht von schräg unten;
- Fig. 3: eine Schnittdarstellung des Codeplättchens gemäß der Schnittlinie III-III aus Fig. 4;
- Fig. 4: eine Draufsicht auf das Codeplättchen;
- Fig. 5: eine perspektivische Ansicht des Codeplättchens in einer ersten Lage;
- Fig. 6: eine perspektivische Ansicht des Codeplättchens in einer zweiten Lage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

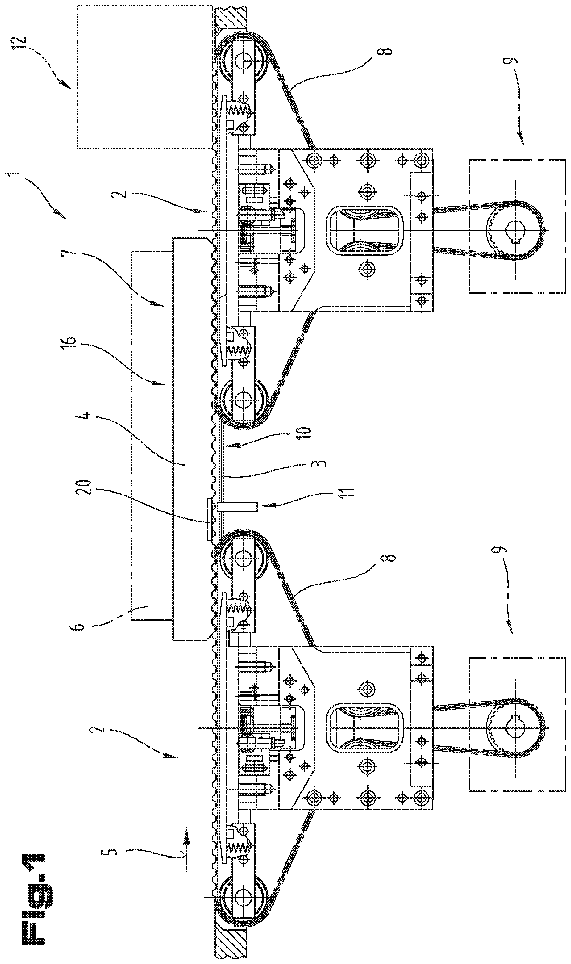

Fig. 1 zeigt in einer schematischen Seitenansicht eine Fertigungsanlage 1 mit zwei Förderabschnitten 2. Die Förderabschnitte 2 umfassen eine Führungsanordnung 3 mittels welcher ein Werkstückträger 4 geführt bzw. gehalten werden kann. Mittels dem Förderabschnitt 2 kann daher ein Werkstückträger 4 zwangsgeführt werden, sodass dieser in Verschieberichtung 5 verschoben werden kann.

Der Werkstückträger 4 dient insbesondere dazu, um ein zu bearbeitendes Werkstück 6 aufnehmen zu können. Insbesondere können an einer Oberseite 7 des Werkstückträgers 4 eine oder mehrere Befestigungs- bzw. Klemmeinrichtungen vorgesehen sein, mittels welchem das Werkstück 6 am Werkstückträger 4 befestigt werden kann. In einer weiteren Ausführungsvariante kann vorgesehen sein, dass das Werkstück 6 lose auf den Werkstückträger 4 aufgelegt wird, wobei am Werkstückträger 4 entsprechende Aufnahmen für das Werkstück 6 vorgesehen sein können.

Wie aus Fig. 1 weiters ersichtlich, kann vorgesehen sein, dass die Förderabschnitte 2 jeweils ein Mitnehmerelement 8 aufweisen, welches von einer Antriebseinheit 9 angetrieben wird. Das Mitnehmerelement 8 kann beispielsweise in Form eines Zahnriemens ausgebildet sein welcher an einer Unterseite 10 des Werkstückträgers 4 eingreifen kann. Die Antriebseinheit 9 kann beispielsweise durch einen Servomotor mit einem darauf angeordneten Antriebsritzel gebildet sein. Durch diesen Aufbau kann der Werkstückträger 4 in Verschieberichtung 5 bewegt werden.

Die Führungsanordnung 3 kann sich über die gesamte Länge der Fertigungsanlage 1 erstrecken, wobei der Werkstückträger 4 frei in der Führungsanordnung 3 verschiebbar ist. Erst durch das Mitnehmerelement 8 ist der Werkstückträger 4 in seiner Position entlang der Führungsanordnung 3 zwangsgeführt. Der Werkstückträger 4 wird auf seinem Transportweg von verschiedenen Förderabschnitten 2 zwangsgeführt, wobei der Werkstückträger 4 bei der Übergabe zwischen zwei Förderabschnitten 2 gleichzeitig mit zwei Mitnehmerelementen 8 der zwei verschiedenen Förderabschnitte 2 in Eingriff stehen kann.

Weiters kann an der Fertigungsanlage 1 ein oder mehrere Erfassungsmittel 11 vorgesehen sein, durch welche der Werkstückträger 4 identifiziert werden kann bzw. durch welche die Position und Orientierung des Werkstückträgers bestimmt werden kann. Das Erfassungsmittel 11 bzw. dessen Funktion wird in weiterer Folge noch genauer beschrieben.

Außerdem kann vorgesehen sein, dass in der Fertigungsanlage 1 eine Bearbeitungsstation 12 vorgesehen ist, in welcher das auf dem Werkstückträger 4 angeordnete Werkstück 6 bearbeitet wird. Die Bearbeitungsstation 12 kann beispielsweise für die mechanische Bearbeitung von Werkstücken ausgebildet sein.

Das Erfassungsmittel 11 kann an beliebiger Stelle in der Fertigungsanlage 1 angeordnet sein. Beispielsweise kann vorgesehen sein, dass das Erfassungsmittel 11 zwischen zwei Förderabschnitten 2 angeordnet ist. Weiters kann vorgesehen sein, dass das Erfassungsmittel 11 im Bereich eines Förderabschnittes 2 angeordnet ist. Insbesondere kann vorgesehen sein, dass das Erfassungsmittel 11 kurz vor einer Bearbeitungsstation 12 angeordnet ist, sodass der Werkstückträger 4 kurz vor dem Einfahren in die Bearbeitungsstation 12 erfasst werden kann.

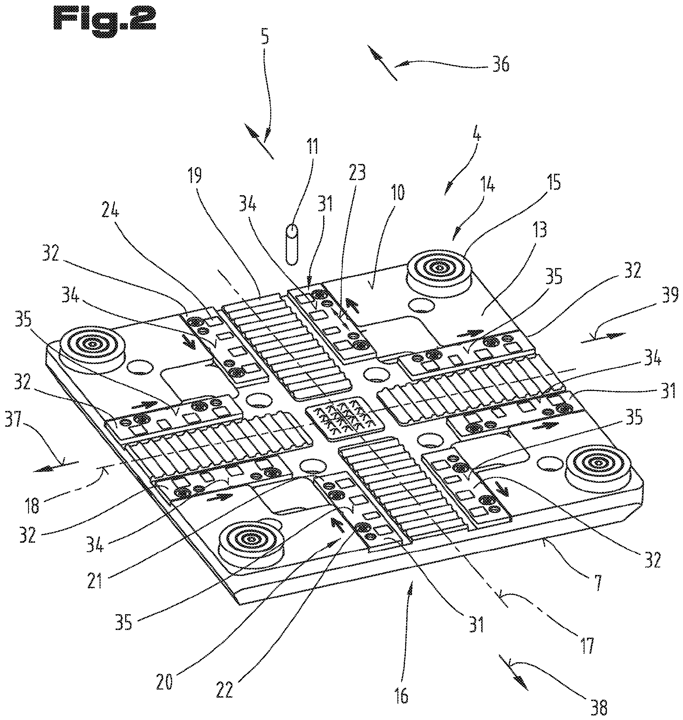

Fig. 2 zeigt eine perspektivische Ansicht eines Werkstückträgers 4. Insbesondere ist die Ansicht derart ausgerichtet, dass eine Unterseite 10 des Werkstückträgers 4 sichtbar ist. Wie in Fig. 2 ersichtlich, kann vorgesehen sein, dass der Werkstückträger 4 einen Werkstückträgerkörper 13 umfasst an welchem verschiedenste Elemente angeordnet sein können. Insbesondere kann an der Unterseite 10 des Werkstückträgerkörper 13 eine Führungseinrichtung 14 angeordnet sein, welche mit der Führungsanordnung 3 der Fertigungsanlage 1 korrespondiert und somit der Werkstückträger 4 zwangsgeführt werden kann.

Die Führungseinrichtung 14 kann insbesondere durch vier Führungsrollen 15 gebildet sein. Die Führungsrollen 15 können an deren Umfang eine Konturierung aufweisen, welche mit einer entsprechenden Gegenkonturierung der Führungsanordnung 3 korrespondiert. Insbesondere kann vorgesehen sein, dass die Führungsrollen 15 eine V-förmige Vertiefung aufweisen und dass die Führungsanordnung 3 eine entsprechen gegengleiche V-förmige Erhebung aufweisen. Generell ist jedoch jede Art von Kontur möglich, durch welche die Führungsanordnung 3 gebildet werden kann.

An der Oberseite 7 des Werkstückträgers 4, insbesondere am Werkstückträgerkörper 13 kann eine Werkstückaufnahme 16 angeordnet sein, in welcher das Werkstück 6 aufgenommen wird. Die Werkstückaufnahme 16 ist in der Darstellung der Fig. 2 nicht sichtbar.

Wie aus Fig. 2 weiters ersichtlich, kann vorgesehen sein, dass der Werkstückträgerkörper 13 im Wesentlichen bezüglich einer ersten Symmetrieebene 17 bzw. bezüglich einer zweiten Symmetrieebene 18 symmetrisch ausgebildet ist. Insbesondere kann vorgesehen sein, dass der Werkstückträgerkörper 13 eine Quadratische Grundfläche aufweist.

Weiters kann vorgesehen sein, dass in beiden Orientierungsrichtungen mittig des Werkstückträgerkörpers 13 eine Verzahnung 19 ausgebildet ist. Die Verzahnung 19 kann gegengleich zum Mitnehmerelement 8, insbesondere Zahnriemen, ausgebildet sein, um mit diesem zu korrespondieren und dadurch den Werkstückträger 4 verschieben zu können.

Erfindungsgemäß sind am Werkstückträgerkörper 13 zumindest vier Codeelemente 20 angeordnet, welche zum Identifizieren des Werkstückträgers 4 dienen. Jedes Codeelement 20 ist in Form eines Codeplättchens 21 ausgebildet, welches am Werkstückträgerkörper 13 befestigt ist. Insbesondere kann vorgesehen sein, dass das Codeplättchen 21 mittels Befestigungsmittel 22 am Werkstückträgerkörper 13 befestigt ist. Die Befestigungsmittel 22 können als Schrauben, insbesondere als Senkkopfschrauben ausgebildet sein.

Durch die mehreren Codeelemente 20 kann die Orientierung des Werkstückträgers 4 bestimmt werden.

Insbesondere kann vorgesehen sein, dass am Werkstückträger 4 jeweils beidseitig der Verzahnung 19 zwei Codeplättchen 21 angeordnet sind.

Zur Identifizierung des Werkstückträgers 4 ist das Erfassungsmittel 11 derart in der Fertigungsanlage 1 angeordnet, dass beim Verschieben des Werkstückträgers 4 in Verschieberichtung 5 die Codeelemente 20 am Erfassungsmittel 11 vorbeibeigeführt werden. Die Codeelemente 20 weisen in einer Längsausrichtung 23, welche parallel zur Verschieberichtung 5 und parallel zur ersten Symmetrieebene 17 bzw. parallel zur zweiten Symmetrieebene 18 liegt, inhomogene Materialeigenschaften auf. Insbesondere kann vorgesehen sein dass die inhomogenen Materialeigenschaften dadurch gebildet sind, dass das Codeelement 20 respektive das Codeplättchen 21 Aussparungen 24 aufweist. Die Aussparungen 24 können beispielsweise in Form von Durchbrüchen ausgebildet sein, welche einen rechteckigen Querschnitt aufweisen.

Das Erfassungsmittel 11 kann beispielsweise in Form eines induktiven Näherungssensors ausgebildet sein, wobei der Sensor den Schaltzustand 1 bzw. 0 ausgeben kann. Der Schaltzustand 1 wird dann ausgegeben, wenn sich in einem gewissen Abstand zum induktiven Sensor sich ein metallischer Werkstoff insbesondere ein austenitischer Stahl oder ein ferromagnetischer Werkstoff befindet. Wenn der austenitische Stahl oder ferromagnetische Werkstoff aus dem Erfassungsbereich des induktiven Sensors entfernt wird, so wird der Informationszustand 0 ausgegeben. Anstatt des austenitischen Stahls oder des ferromagnetischen Werkstoffes kann auch ein beliebiger weiterer Werkstoff verwendet werden, welcher vom induktiven Näherungssensor erfasst werden kann.

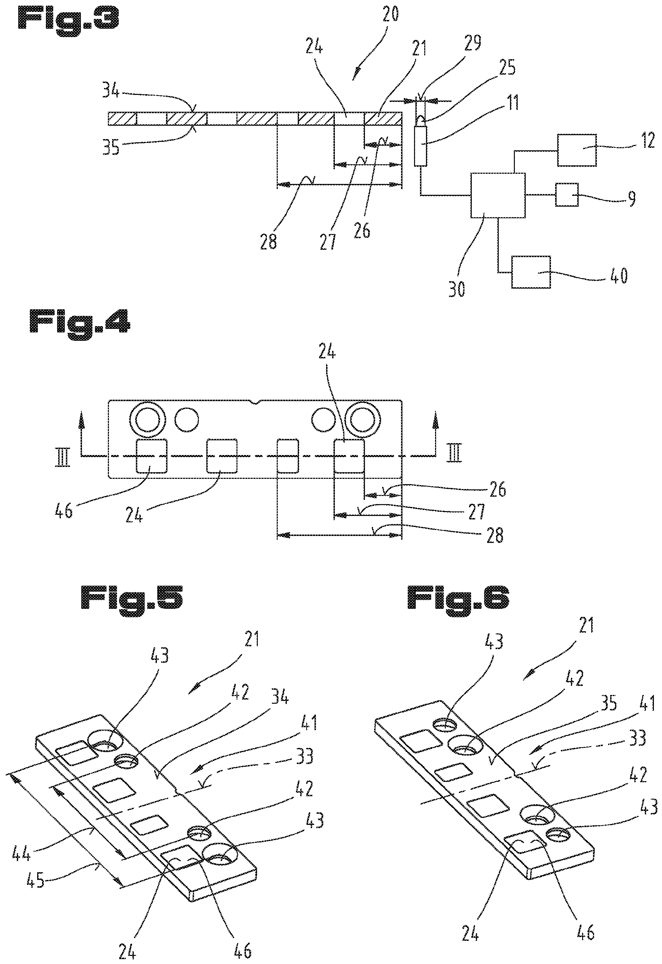

Fig. 3 zeigt das Codeplättchen 21 in einer Schnittdarstellung entlang dessen Längsausrichtung 23, insbesondere gemäß der Schnittlinie III-III in Fig. 4. In Fig. 3 sind die Aussparungen 24 besonders gut ersichtlich.

Die genaue Funktionsweise zum Identifizieren des Codeplättchens 21 bzw. des Werkstückträgers 4 wird im Folgenden anhand einer Zusammenschau der Figuren 2 und 3 beschrieben.

Im Ausgangszustand befindet sich der Werkstückträger 4 an einer beliebigen Position im Förderabschnitt 2. Wenn nun der Werkstückträger 4 in Verschieberichtung 5 zur Bearbeitungsstation 12 bewegt wird, so nähert sich das Codeelement 20 des Werkstückträgers 4 insbesondere das Codeplättchen 21, dem Erfassungsmittel 11. Das Erfassungsmittel 11 hat hierbei noch den Informationszustand 0. Wenn nun der Werkstückträger 4 soweit zum Erfassungsmittel 11 verschoben wird, dass das Codeelement 20 in den Erfassungsbereich 25 des Erfassungsmittels 11 eingeschoben wird, so ändert sich der Informationszustand des Erfassungsmittels 11 von 0 auf 1. Dieses Umspringen vom Informationszustand 0 auf den Informationszustand 1 wird als steigende Flanke bezeichnet. Der Informationszustand 1 liegt nun solange an, bis das Vollmaterial des Codeelementes 20 aus dem Erfassungsbereich 25 des Erfassungsmittels 11 austritt und sich der Erfassungsbereich 25 innerhalb einer Aussparung 24 befindet und daher kein Vollmaterial detektiert. Bei diesem Übergang springt der Informationszustand des Erfassungsmittels 11 von 1 auf 0. Dies wird als fallende Flanke bezeichnet. Wenn nun der Werkstückträger 4 weiter in Verschieberichtung 5 verschoben wird, so gerät aufgrund der begrenzten Erstreckung der Aussparung 24 wieder volles Material in den Erfassungsbereich 25 des Erfassungsmittels 11 und der Informationszustand springt wieder auf 1.

Kennt man nun die aktuelle Geschwindigkeit des Werkstückträgers 4, so kann man aufgrund der Zeitdifferenz zwischen dem umspringenden der Informationszustände 0 und 1, die Größe und Lage der Aussparungen 24 ermittelt werden, wobei die Formgestaltung der Aussparungen 24 zur Identifizierung des Werkstückträgers 4 herangezogen werden kann. Wie aus Fig. 3 ersichtlich, kann beispielsweise eine erste Länge 26 zwischen erster steigender Flanke und erster fallender Flanke ermittelt werden. Außerdem kann eine zweite Länge 27 zwischen erster steigender Flanke und zweiter steigender Flanke ermittelt werden. Darüber hinaus kann eine dritte Länge 28 zwischen erster, steigender Flanke und dritter steigender Flanke ermittelt werden. Dies gilt analog für die weiteren Abstände der restlichen Aussparungen 24. Analog dazu verläuft auch die Erfassung der Abstände von fallender Flanke zu fallender Flanke.

Wie aus Fig. 3 ersichtlich, weist der Erfassungsbereich 25 des Erfassungsmittels 11 eine gewisse Dicke 29 auf sodass eine Länge zwischen steigender Flanke und fallender Flanke, entsprechend der Dicke 29 ungenau erfasst wird. Weiters ist ersichtlich, dass die Dicke 29 des Erfassungsbereiches 25 auch vom Abstand des Codeplättchens 21 zum Erfassungsmittel 11 abhängig ist.

Aus den oben genannten Gründen, hat es sich als vorteilhaft erwiesen, wenn nur die Längen zwischen zwei steigenden Flanken ermittelt werden, da es hier zu keinem Fehlereinfluss aufgrund des Erfassungsbereiches 25 des Erfassungsmittels 11 kommt.

Mittels der Verfahrgeschwindigkeit des Werkstückträgers 4 welche von einer Steuereinheit 30 an die Antriebseinheit 9 vorgegeben wird bzw. bedarfsweise durch einen Sensor von der Steuereinheit 30 erfasst werden kann, sowie dem ermittelten Zeitabstand der steigenden Flanken, können nun die zweite Länge 27, die dritte Länge 28 usw. bestimmt werden. Neben dem Bewegen des Werkstückträgers 4 mit konstanter Verfahrgeschwindigkeit ist es auch möglich den Werkstückträger 4 während des Vorbeibewegens an dem Erfassungsmittel 11 zu beschleunigen oder zu verzögern. Eine Beschleunigung oder eine Verzögerung wird ebenfalls bei der Ermittlung der Form der Codeplättchen 21 in der Berechnung berücksichtigt.

Ein bestimmtes Muster bzw. eine bestimmte Form eines Codeplättchens 21 ist einem bestimmten Werkstückträger 4 zugeordnet. Durch Abgleich der Form des Codeplättchens 21 mit einer Datenbank kann dadurch der Werkstückträger 4 identifiziert werden.

Durch die erste steigende Flanke am Beginn des Codeplättchens 21 kann darüber hinaus die Position des Werkstückträgers 4 ermittelt und mit der von der Steuereinheit 30 vorgegebenen soll Position abgeglichen werden. Die ist möglich, da die verschiedenen Codeplättchen 21 in deren Außenkontur alle gleich gestaltet sind und auch die Position der Codeplättchen 21 am Werkstückträger 4 festgelegt ist.

Wie aus Fig. 2 ersichtlich, können in Verschieberichtung 5 direkt hintereinander zwei Codeplättchen 21 am Werkstückträger 4 angeordnet sein, wobei diese zum besseren Verständnis als erstes Codeplättchen 31 bzw. als zweites Codeplättchen 32 bezeichnet werden. Beim Verfahren des Werkstückträgers 4, wird vom Erfassungsmittel 11 erst das erste Codeplättchen 31 erfasst, und anschließend das zweite Codeplättchen 32 erfasst. Dabei kann vorgesehen sein, dass in allen vier Richtungen jeweils eins erstes Codeplättchen 31 und ein zweites Codeplättchen 32 vorhanden sind, wodurch die Orientierung des Werkstückträgers 4 bestimmt werden kann.

Insbesondere ist es denkbar, dass das erste Codeplättchen 31 und das zweite Codeplättchen 32 bzw. sämtliche in einem einzigen der Werkstückträger 4 befestigten Codeplättchen 21 dieselbe Geometrie bzw. Formgebung aufweisen. Um die Orientierung des Werkstückträgers 4 bestimmen zu können, ist es notwendig, dass die Codeplättchen 21 nicht symmetrisch bezüglich der Längsmitte 33 ausgebildet sind.

Dadurch kann bei den Codeplättchen 21 zwischen einer Oberseite 34 und einer Unterseite 35 unterschieden werden. Wie aus Fig. 2 ersichtlich können somit die vier Orientierungsrichtungen des Werkstückträgers 4 bestimmt werden.

In einer ersten Orientierungsrichtung 36 ist beim ersten Codeplättchen 31 die Oberseite 34 dem Sensor 11 zugewandt und beim zweiten Codeplättchen 32 die Unterseite 35 dem Sensor 11 zugewandt.

In einer zweiten Orientierungsrichtung 37 ist beim ersten Codeplättchen 31 die Unterseite 35 dem Sensor 11 zugewandt und beim zweiten Codeplättchen 32 die Unterseite 35 dem Sensor 11 zugewandt.

In einer dritten Orientierungsrichtung 38 ist beim ersten Codeplättchen 31 die Unterseite 35 dem Sensor 11 zugewandt und beim zweiten Codeplättchen 32 die Oberseite 34 dem Sensor 11 zugewandt.

In einer vierten Orientierungsrichtung 39 ist beim ersten Codeplättchen 31 die Oberseite 34 dem Sensor 11 zugewandt und beim zweiten Codeplättchen 32 die Oberseite 34 dem Sensor 11 zugewandt.

Durch die beschriebene Anordnung der Codeplättchen 31 am Werkstückträger 4 kann mit acht Codeplättchen 31, welche alle dieselbe Form aufweisen auch die Orientierung des Werkstückträgers 4 bestimmt werden.

Die Information der Identifizierung des Werkstückträgers 4 bzw. der Position und Orientierung des Werkstückträgers 4 kann mit Vergleichsdaten zu den Codeplättchen 31 bzw. zum Werkstückträger 4, welche auf einer Speichereinheit, beispielsweise einem zentralen Server 40 abgespeichert sind, abgeglichen werden. Dadurch kann der Werkstückträger 4 eindeutig identifiziert werden und auch seine Orientierung eruiert werden. Die Informationen über den identifizierten Werkstückträger 4 können in die Steuereinheit 30 übertragen werden und von dieser entsprechend zu verwertet bzw. an die Bearbeitungsstation 12 weiter gegeben werden.

Dadurch dass die Daten zu den Werkstückträgern 4 zentral abgespeichert sind, ist es möglich diese während dem Betrieb der Fertigungsanlage 1 anzupassen bzw. zusätzliche Informationen einzulesen. Dies bringt den Vorteil mit sich, dass die Werkstückträger 4 für das zusätzliche Einbringen von Informationen nicht gestoppt werden müssen.

Fig. 5 zeigt das Codeplättchen 21 in einer perspektivischen Ansicht in einer ersten Lage, wobei die Oberseite 34 des Codeplättchens 21 sichtbar ist. In der Fig. 5 werden wiederum für gleiche Teile gleiche Bezugszeichen bzw. Bauteilbezeichnungen wie in den vorangegangenen Figuren 1 bis 4 verwendet. Um unnötige Wiederholungen zu vermeiden, wird auf die detaillierte Beschreibung in den vorangegangenen Figuren 1 bis 4 hingewiesen bzw. Bezug genommen.

Fig. 6 zeigt das Codeplättchen 21 in einer perspektivischen Ansicht in einer zweiten Lage, wobei die Unterseite 35 des Codeplättchens 21 sichtbar ist. In der Fig. 6 werden wiederum für gleiche Teile gleiche Bezugszeichen bzw. Bauteilbezeichnungen wie in den vorangegangenen Figuren 1 bis 5 verwendet. Um unnötige Wiederholungen zu vermeiden, wird auf die detaillierte Beschreibung in den vorangegangenen Figuren 1 bis 5 hingewiesen bzw. Bezug genommen.

Wie aus den Figuren 5 und 6 ersichtlich, kann vorgesehen sein, dass am Codeplättchen 21 eine Kerbe 41 ausgebildet ist, welche als Orientierungshilfe bei der Montage der Codeplättchen 21 am Werkstückträger 4 dient.

Darüber hinaus kann vorgesehen sein, dass jeweils ein Codeplättchen 21 mit zwei Befestigungsmitteln 22 am Werkstückträgerkörper 13 befestigt ist. Das Codeplättchen 21 kann dabei zwei innere Durchgangslöcher 42 und zwei äußere Durchgangslöcher 43 aufweisen wobei die inneren Durchgangslöcher 42 in einem Lochabstand a 44 und die äußeren Durchgangslöcher 43 in einem Lochabstand b 45 zueinander beabstandet sind.

Die äußeren Durchgangslöcher 43 weisen vorzugsweise an der Oberseite 34 des Codeplättchen 21 eine Senkung auf und die inneren Durchgangslöcher 42 weisen vorzugsweise an der Unterseite 35 des Codeplättchens 21 eine Senkung auf.

Wie aus Fig. 2 ersichtlich, sind die Gewindebohrungen zur Aufnahme der Befestigungsmittel 22 im Werkstückträgerkörper 13 entweder im Lochabstand a 44 bzw. im Lochabstand b 45 ausgebildet, sodass dadurch die Befestigungslage des Codeplättchens am Werkstückträgerkörper 13 vorgegeben ist. Somit kann einer falschen Montage der Codeplättchen 21 am Werkstückträgerkörper 13 vorgebeugt werden. Auch die Orientierung des Werkstückträgers 4 wird dadurch eindeutig bestimmt.

Weiters kann vorgesehen sein, dass die Aussparungen 24 in den Codeplättchen 21 mit einem Füllmaterial 46 gefüllt sind. Ein derartiges Füllmaterial kann beispielsweise in Form eines Kunstharzes oder dergleichen ausgebildet sein. Das Füllmaterial 46 dient dazu, dass keine Fremdkörper wie etwa Schmutz in die Aussparungen 24 gelangen kann. Dadurch kann eine Verfälschung des vom Erfassungsmittel 11 abgegebenen Signales hintangehalten werden.

Analog zum beschriebenen Ausführungsbeispiel ist es auch denkbar, dass das Erfassungsmittel 11 beispielsweise als optischer Sensor ausgebildet ist und das Codeelement 20 bedarfsweise eine spiegelnde Oberfläche aufweist. Weiters ist es auch denkbar, dass das Erfassungsmittel 11 als Hallsensor ausgebildet ist. Auch weitere Sensoren können für das Erfassungsmittel 11 eingesetzt werden, wobei eine Materialinhomogenität im Codeelement vom Erfassungsmittel 11 erfasst wird.

Der Ordnung halber sei abschließend darauf hingewiesen, dass zum besseren Verständnis des Aufbaus des Werkstückträgers 4 dieser bzw. dessen Bestandteile in den Figuren 2, 3, 4, 5 und 6 größtenteils maßstäblich dargestellt wurden. Die Fertigungsanlage 1 wurde in Fig. 1 nur schematisch und daher unmaßstäblich und/oder vergrößert und/oder verkleinert dargestellt.

### Bezugszeichenaufstellung

| | | | |
|---|---|---|---|
| 1 | Fertigungsanlage | 31 | erstes Codeplättchen |
| 2 | Förderabschnitt | 32 | zweites Codeplättchen |
| 3 | Führungsanordnung | 33 | Längsmitte |
| 4 | Werkstückträger | 34 | Oberseite Codeplättchen |
| 5 | Verschieberichtung | 35 | Unterseite Codeplättchen |
| 6 | Werkstück | 36 | erste Orientierungsrichtung |
| 7 | Oberseite Werkstückträger | 37 | zweite Orientierungsrichtung |
| 8 | Mitnehmerelement | 38 | dritte Orientierungsrichtung |
| 9 | Antriebseinheit | 39 | vierte Orientierungsrichtung |
| 10 | Unterseite Werkstückträger | 40 | Server |
| 11 | Erfassungsmittel | 41 | Kerbe |
| 12 | Bearbeitungsstation | 42 | inneres Durchgangsloch |
| 13 | Werkstückträgerkörper | 43 | äußeres Durchgangsloch |
| 14 | Führungseinrichtung | 44 | Lochabstand a |
| 15 | Führungsrolle | 45 | Lochabstand b |
| 16 | Werkstückaufnahme | 46 | Füllmaterial |
| 17 | Erste Symmetrieebene | | |
| 18 | Zweite Symmetrieebene | | |
| 19 | Verzahnung | | |
| 20 | Codeelement | | |
| 21 | Codeplättchen | | |
| 22 | Befestigungsmittel | | |
| 23 | Längsausrichtung | | |
| 24 | Aussparung | | |
| 25 | Erfassungsbereich | | |
| 26 | erste Länge | | |
| 27 | zweite Länge | | |
| 28 | dritte Länge | | |
| 29 | Dicke | | |
| 30 | Steuereinheit | | |

## Patentansprüche

1. Werkstückträger (4) für eine Fertigungsanlage (1) mit zumindest einem Förderabschnitt (2), der Werkstückträger (4) umfassend einen Werkstückträgerkörper (13), eine am Werkstückträgerkörper (13) angeordnete Werkstückaufnahme (16), eine am Werkstückträgerkörper (13) angeordnete Führungseinrichtung (14) durch welche der Werkstückträger (4) verschiebbar in der Fertigungsanlage (1), insbesondere im Förderabschnitt (2), aufnehmbar ist, und ein am Werkstückträgerkörper (13) angeordnetes Codeelement (20) welches zur Identifizierung des Werkstückträgers (4) mittels einem in der Fertigungsanlage (1) angeordneten Erfassungsmittel (11) ausgebildet ist, wobei das Codeelement (20) als auf den Werkstückträgerkörper (13) befestigtes Codeplättchen (21) ausgebildet ist und zu dessen Identifizierung in einer Längsausrichtung (23) inhomogene Materialeigenschaften aufweist, und wobei bei einer Relativbewegung des Codeelements (20) in Längsausrichtung (23) relativ zum Erfassungsmittel (11) die inhomogenen Materialeigenschaften des Codeelements (20) durch das Erfassungsmittel (11) erfassbar sind und dadurch der Werkstückträger (4) identifizierbar ist,
**dadurch gekennzeichnet, dass** die inhomogenen Materialeigenschaften durch Aussparungen (24) im Codeelement gebildet sind, und dass am Werkstückträgerkörper (13) zumindest vier Codeelemente (20) derart angeordnet sind, dass die Orientierung des Werkstückträgerkörpers (13) bestimmbar ist.

2. Werkstückträger nach Anspruch 1, **dadurch gekennzeichnet, dass** das Codeelement (20) aus einem metallischen Werkstoff, insbesondere aus einem austenitischem Stahl, gebildet ist.

3. Werkstückträger nach Anspruch 1 oder 2, **dadurch gekennzeichnet, dass** die Aussparungen (24) durch ein Füllmaterial (46), wie etwa Kunstharz, ausgefüllt sind.

4. Werkstückträger nach einem der vorhergehenden Ansprüche, **dadurch gekennzeichnet, dass** acht Codeelemente (20) in Form von Codeplättchen (21) an dem Werkstückträgerkörper (13) angeordnet sind, wobei alle Codeplättchen (21) gleich ausgebildet sind.

5. Werkstückträger nach einem der vorhergehenden Ansprüche, **dadurch gekennzeichnet, dass** die Codeelemente (20) an einer Unterseite (10) des Werkstückträgerkörpers (13) angeordnet sind.

6. Fertigungsanlage (1) umfassend zumindest einen Förderabschnitt (2) mit einer Führungsanordnung (3), zumindest einen Werkstückträger (4) nach einem der vorgehenden Ansprüche, wobei die Führungseinrichtung (14) des Werkstückträgers (4) in der Führungsanordnung (3) des Förderabschnittes (2) geführt ist, und zumindest ein in der Fertigungsanlage (1) angeordnetes Erfassungsmittel (11), welches zur Identifizierung eines der am Werkstückträger (4) angeordneten Codeelemente (20) ausgebildet ist.

7. Fertigungsanlage nach Anspruch 6, **dadurch gekennzeichnet, dass** das Erfassungsmittel (11) in Form eines induktiven Näherungssensors ausgebildet ist.

8. Verfahren zum Identifizieren eines Werkstückträgers (4) in einer Fertigungsanlage (1), wobei das Verfahren folgende Verfahrensschritte umfasst:
- Bewegen des Werkstückträgers (4) in einem Förderabschnitt (2) der Fertigungsanlage (1), wobei der Werkstückträger (4) ein Codeelement (20) aufweist, welches zur Identifizierung des Werkstückträgers (4) mittels einem in der Fertigungsanlage (1) angeordneten Erfassungsmittel (11) ausgebildet ist, und welches zur Identifizierung in einer Längsausrichtung (23) inhomogene Materialeigenschaften aufweist;
- Vorbeiführen des Werkstückträgers (4) am Erfassungsmittel (11), wobei bei einer Relativbewegung des Codeelements (20) relativ zum Erfassungsmittel (11) die inhomogenen Materialeigenschaften des Codeelements (20) durch das Erfassungsmittel (11) erfasst werden; und
- Auswerten des vom Erfassungsmittel (11) abgegebenen Signals und dadurch identifizieren des Werkstückträgers (4);
**dadurch gekennzeichnet, dass** die Fertigungsanlage (1) nach Anspruch 6 oder 7 ausgebildet ist.

9. Verfahren nach Anspruch 8, **dadurch gekennzeichnet, dass** das Erfassungsmittel (11) in Form eines induktiven Näherungssensors ausgebildet ist und das Codeelement (20) aus einem metallischen Werkstoff, insbesondere aus einem ferromagnetischen Werkstoff, gebildet ist und Aussparungen (24) aufweist, wodurch die inhomogenen Materialeigenschaften gebildet sind, wobei beim Vorbeiführen des Werkstückträgers (4) am Erfassungsmittel (11) von diesem die Aussparungen (24) erfasst werden.

10. Verfahren nach Anspruch 9, **dadurch gekennzeichnet, dass** die Codeelemente (20) aufgrund unterschiedlicher Lage und Größe der Aussparungen (24) unterschieden werden können und dadurch ein Werkstückträger (4) eindeutig identifiziert werden kann.

11. Verfahren nach Anspruch 9 oder 10, **dadurch gekennzeichnet, dass** bei den Codeelementen (20) die Abstände von steigender Flanke zu steigender Flanke und/oder von fallender Flanke zu fallender Flanke erfasst werden.

12. Verfahren nach einem der Ansprüche 8 bis 11, **dadurch gekennzeichnet, dass** an einem Werkstückträger (4) acht Codeelemente (20) angeordnet sind, welche in Form von Codeplättchen (21) ausgebildet sind, wobei beim Vorbeiführen des Werkstückträgers (4) am Erfassungsmittel (11) immer zwei Codeplättchen (21) erfasst werden und über die Orientierung der Codeplättchen (21) die Orientierung des Werkstückträgers (4) ermittelt wird.

13. Verfahren nach einem der Ansprüche 8 bis 12, **dadurch gekennzeichnet, dass** auf Basis der Identifizierung des Werkstückträgers (4), die relevanten Daten des Identifizierten Werkstückträgers (4), wie etwa Informationen zu den zu bearbeitenden Werkstücken, über ein Netzwerk von einem Server geladen werden.

14. Verfahren nach einem der Ansprüche 8 bis 13, **dadurch gekennzeichnet, dass** eine Steuereinheit (30) die Verfahrgeschwindigkeit des Werkstückträgers (4) beim Vorbeiführen am Erfassungsmittel (11) vorgibt bzw. ermittelt und aufgrund der Taktung des eingehenden Signals des Erfassungsmittels (11) die geometrische Ausgestaltung des Codeelements (20) ermittelt wird und somit der Werkstückträger (4) identifiziert wird.

15. Verfahren nach einem der Ansprüche 8 bis 14, **dadurch gekennzeichnet, dass** durch das Erfassungsmittel (11) die aktuelle Position des Werkstückträgers (4) erfasst wird.

## Claims

1. A workpiece carrier (4) for a production plant (1) with at least one conveying section (2), the workpiece carrier (4) comprising a workpiece carrier body (13), a workpiece receptacle (16) arranged on the workpiece carrier body (13), a guide device (14) arranged on the workpiece carrier body (13), by means of which the workpiece carrier (4) can be received in the production plant (1), in particular in the conveying section (2), in a displaceable manner, and a code element (20) arranged on the workpiece carrier body (13), which is designed to identify the workpiece carrier (4) by means of a detection means (11) arranged in the production plant (1), wherein the code element (20) is formed as a code plate (21) fastened to the workpiece carrier body (13) and has material properties which are inhomogeneous in a longitudinal orientation (23) for its identification, and wherein during a relative movement of the code element (20) in a longitudinal orientation (23) relative to the detection means (11), the inhomogeneous material properties of the code element (20) can be detected by the detection means (11) and the workpiece carrier (4) can be identified thereby, **characterized in that** the inhomogeneous material properties are formed by openings (24) in the code element, and that at least four code elements (20) are arranged on the workpiece carrier body (13) such that the orientation of the workpiece carrier body (13) can be determined.

2. The workpiece carrier according to claim 1, **characterized in that** the code element (20) is formed of a metallic material, in particular of an austenitic steel.

3. The workpiece carrier according to claim 1 or 2, **characterized in that** the openings (24) are filled in by a filling material (46) such as synthetic resin.

4. The workpiece carrier according to one of the preceding claims, **characterized in that** eight code elements (20) in the form of code plates (21) are arranged on the workpiece carrier body (13), wherein all code plates (21) are designed to be identical.

5. The workpiece carrier according to one of the preceding claims, **characterized in that** the code elements (20) are arranged on an underside (10) of the workpiece carrier body (13).

6. A production plant (1) comprising at least one conveying section (2) with a guide structure (3), at least one workpiece carrier (4) according to one of the preceding claims, wherein the guide device (14) of the workpiece carrier (4) is guided in the guide structure (3) of the conveying section (2), and at least one detection means (11) arranged in the production plant (1), which is designed for identifying one of the code elements (20) arranged on the workpiece carrier (4).

7. The production plant according to claim 6, **characterized in that** the detection means (11) is designed in the form of an inductive proximity sensor.

8. A method for identification of a workpiece carrier (4) in a production plant (1), wherein the method comprises the following steps:
- moving the workpiece carrier (4) in a conveying section (2) of the production plant (1), wherein the workpiece carrier (4) has a code element (20), which is designed for identifying the workpiece carrier (4) by use of a detection means (11) arranged in the production plant (1), and which has inhomogeneous material properties in a longitudinal orientation (23) for identification purposes;
- guiding the workpiece carrier (4) past the detection means (11), wherein during a relative movement of the code element (20) relative to the detection means (11), the inhomogeneous material properties of the code element (20) are detected by the detection means (11); and
- evaluating the signal emitted by the detection means (11) and thereby identifying the workpiece carrier (4);
**characterized in that** the production plant (1) is designed according to claim 6 or 7.

9. The method according to claim 8, **characterized in that** the detection means (11) is designed in the form of an inductive proximity sensor and the code element (20) is formed of a metallic material, in particular of a ferromagnetic material, and has openings (24) by which the inhomogeneous material properties are created, wherein when the workpiece carrier (4) is guided past the detection means (11), the latter detects these openings (24).

10. The method according to claim 9, **characterized in that** the code elements (20) can be differentiated by different positions and sizes of the openings (24), and the workpiece carrier (4) can thus be clearly identified.

11. The method according to claim 9 or 10, **characterized in that** it is possible for distances from rising flank to rising flank and/or from falling flank to falling flank to be detected on the code elements (20).

12. The method according to one of claims 8 to 11, **characterized in that** eight code elements (20) are arranged on a workpiece carrier (4), designed in the form of code plates (21), wherein when the workpiece carrier (4) is guided past the detection means (11), two code plates (21) are always detected and the orientation of the workpiece carrier (4) is determined based on the orientation of the code plates (21).

13. The method according to one of claims 8 to 12, **characterized in that**, based on the identification of the workpiece carrier (4), the relevant data of the identified workpiece carrier (4), such as information about the workpieces to be processed, is downloaded by a server via a network.

14. The method according to one of claims 8 to 13, **characterized in that** a control unit (30) specifies and/or determines the travel speed of the workpiece carrier (4) when passing the detection means (11) and, based on the timing of the incoming signal from the detection means (11), the geometric configuration of the code element (20) is determined and the workpiece (4) is thus identified.

15. The method according to one of claims 8 to 14, **characterized in that** the detection means (11) detects the current position of the workpiece carrier (4).

## Revendications

1. Porte-pièce (4) pour une installation de fabrication (1) avec au moins une portion de convoyage (2), le porte-pièce (4) comprenant un corps de porte-pièce (13), un logement de porte-pièce (16) disposé sur le corps de porte-pièce (13), un dispositif de guidage (14) disposé sur le corps de porte-pièce (13), grâce auquel le porte-pièce (4) peut être logé de manière coulissante dans l'installation de fabrication (1), plus particulièrement dans la portion de convoyage (2), et un élément de codage (20) disposé sur le corps de porte-pièce (13), qui est conçu pour l'identification du porte-pièce (4) à l'aide d'un moyen de détection (11) disposé dans l'installation de fabrication (1), dans lequel l'élément de codage (20) est conçu comme une plaquette de codage (21) fixée sur le corps de porte-pièce (13) et présente, pour son identification, des propriétés de matériaux inhomogènes dans une orientation longitudinale (23) et dans lequel, lors d'un mouvement relatif de l'élément de codage (20) dans l'orientation longitudinale (23) par rapport au moyen de détection (11), les propriétés de matériaux inhomogènes de l'élément de codage (20) peuvent être détectées par le moyen de détection (11) et le porte-pièce (4) peut ainsi être identifié,
**caractérisé en ce que** les propriétés de matériaux inhomogènes sont dues à des évidements (24) dans l'élément de codage et **en ce que**, sur le corps de porte-pièce (13), sont disposés au moins quatre éléments de codage (20) de façon à ce que l'orientation du corps de porte-pièce (13) puisse être déterminée.

2. Porte-pièce selon la revendication 1, **caractérisé en ce que** l'élément de codage (20) est constitué d'un matériau métallique, plus particulièrement d'un acier austénitique.

3. Porte-pièce selon la revendication 1 ou 2, **caractérisé en ce que** les évidements (24) sont remplis d'un matériau de remplissage (46) tel que de la résine synthétique.

4. Porte-pièce selon l'une des revendications précédentes, **caractérisé en ce que** huit éléments de codage (20) sont disposés, sous la forme de plaquettes de codage (21), sur le corps de porte-pièce (13), dans lequel toutes les plaquettes de codage (21) sont conçues de manière identique.

5. Porte-pièce selon l'une des revendications précédentes, **caractérisé en ce que** les éléments de codage (20) sont disposés sur un côté inférieur (10) du corps de porte-pièce (13).

6. Installation de fabrication (1) comprenant au moins une portion de convoyage (2) avec une disposition de guidage (3), au moins un porte-pièce (4) selon l'une des revendications précédentes, dans lequel le dispositif de guidage (14) du porte-pièce (4) est guidé dans la disposition de guidage (3) de la portion de convoyage (2), et au moins un moyen de détection (11) disposé dans l'installation de fabrication (1), qui est conçu pour l'identification d'un des éléments de codage (20) disposés sur le porte-pièce (4).

7. Installation de fabrication selon la revendication 6, **caractérisée en ce que** le moyen de détection (11) est conçu sous la forme d'un capteur de proximité inductif.

8. Procédé d'identification d'un porte-pièce (4) dans une installation de fabrication (1), dans lequel le procédé comprend les étapes suivantes :
- déplacement du porte-pièce (4) dans une portion de convoyage (2) de l'installation de fabrication (1), dans lequel le porte-pièce (4) comprend un élément de codage (20) qui est conçu pour l'identification du porte-pièce (4) à l'aide d'un moyen de détection (11) disposé dans l'installation de fabrication (1) et qui présente, pour l'identification, des propriétés de matériaux inhomogènes dans une orientation longitudinale (23) ;
- passage du porte-pièce (4) devant le moyen de détection (11), dans lequel, lors d'un mouvement relatif de l'élément de codage (20) par rapport au moyen de détection (11), les propriétés de matériaux inhomogènes de l'élément de codage (20) sont détectées par le moyen de détection (11) ; et
- analyse du signal émis par le moyen de détection (11) et donc identification du porte-pièce (4) ;
**caractérisé en ce que** l'installation de fabrication (1) est conçue selon la revendication 6 ou 7.

9. Procédé selon la revendication 8, **caractérisé en ce que** le moyen de détection (11) se présente sous la forme d'un capteur de proximité inductif et l'élément de codage (20) est constitué d'un matériau métallique, plus particulièrement d'un matériau ferromagnétique, et comprend des évidements (24) qui permettent de produire les propriétés de matériaux inhomogènes, dans lequel, lors du passage du porte-pièce (4) devant le moyen de détection (11) les évidements (24) sont détectées par celui-ci.

10. Procédé selon la revendication 9, **caractérisé en ce que** les éléments de codage (20) peuvent être différenciés sur la base des différentes positions et tailles des évidements (24) et un porte-pièce (4) peut ainsi être identifié de manière unique.

11. Procédé selon la revendication 9 ou 10, **caractérisé en ce que**, sur les éléments de codage (20), les distances d'un flanc ascendant à l'autre et/ou d'un flanc descendant à l'autre sont détectées.

12. Procédé selon l'une des revendications 8 à 11, **caractérisé en ce que**, sur un porte-pièce (4), sont disposés huit éléments de codage (20) qui se présentent sous la forme de plaquettes de codage (21), dans lequel, lors du passage du porte-pièce (4) devant le moyen de détection (11), deux plaquettes de codage (21) sont toujours détectées et l'orientation des plaquettes de codage (21) permet de déterminer l'orientation du porte-pièce (4).

13. Procédé selon l'une des revendications 8 à 12, **caractérisé en ce que**, sur la base de l'identification du porte-pièce (4), les données pertinentes de l'identification du porte-pièce (4), comme les informations concernant les pièces à usiner, sont chargées par un serveur par l'intermédiaire d'un réseau.

14. Procédé selon l'une des revendications 8 à 13, **caractérisé en ce qu'**une unité de commande (30) impose respectivement détermine la vitesse de déplacement du porte-pièce (4) lors du passage devant le moyen de détection (11) et, sur la base du cadencement du signal entrant du moyen de détection (11), la forme géométrique de l'élément de codage (20) est déterminée et le porte-pièce (4) est donc identifié.

15. Procédé selon l'une des revendications 8 à 14, **caractérisé en ce que** le moyen de détection (11) détecte la position actuelle du porte-pièce (4).
